(19) Europäisches Patentamt
European Patent Office
Office européen des brevets

(11) **EP 2 274 782 B1**

(12) **EUROPÄISCHE PATENTSCHRIFT**

(45) Veröffentlichungstag und Bekanntmachung des Hinweises auf die Patenterteilung:
**23.09.2015  Patentblatt 2015/39**

(51) Int Cl.:
*H01M 2/20* (2006.01)  *H01M 2/22* (2006.01)
*H01M 4/64* (2006.01)  *H01M 4/66* (2006.01)
*H01M 10/05* (2010.01)  *H01M 10/056* (2010.01)

(21) Anmeldenummer: **09729488.8**

(22) Anmeldetag: **03.04.2009**

(86) Internationale Anmeldenummer:
**PCT/EP2009/002487**

(87) Internationale Veröffentlichungsnummer:
**WO 2009/124696 (15.10.2009 Gazette 2009/42)**

(54) **GALVANISCHE ZELLE MIT VERBESSERTER LEBENSDAUER**

GALVANIC CELL HAVING IMPROVED SERVICE LIFE

CELLULE GALVANIQUE À DURÉE DE SERVICE AMÉLIORÉE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.04.2008  DE 102008018061**

(43) Veröffentlichungstag der Anmeldung:
**19.01.2011  Patentblatt 2011/03**

(73) Patentinhaber: **Li-Tec Battery GmbH**
**01917 Kamenz (DE)**

(72) Erfinder:
• **HOFMANN, Jürgen**
**01917 Kamenz (DE)**
• **MICKEL, Magnus**
**02997 Wittichenau (DE)**
• **EICHINGER, Günter**
**63674 Altenstadt (DE)**

(74) Vertreter: **JENSEN & SON et al**
**366-368 Old Street**
**London**
**EC1V 9LT (GB)**

(56) Entgegenhaltungen:
**EP-A- 1 235 286        EP-A- 1 487 034**
**EP-A1- 1 655 797      WO-A1-2007/072833**
**GB-A- 2 068 633        JP-A- 2001 313 037**
**US-A- 4 315 060        US-A1- 2007 196 729**
**US-B1- 6 416 900**

**Beschreibung**

Die Erfindung betrifft eine galvanische Zelle, welche Energie chemisch speichert und elektrische Energie zur Verfügung stellt. Die Erfindung wird in Bezug auf wiederaufladbare galvanische Zellen beschrieben, deren Elektrolyt Lithium-Ionen aufweist. Es wird jedoch darauf hingewiesen, dass die Erfindung auch im Zusammenhang mit galvanischen Zellen bestimmt für nur einmaligen Gebrauch und/oder unter Verwendung anderer Elektrolyte Anwendung finden kann.

Aus dem Stand der Technik sind wiederaufladbare galvanische Zellen verschiedener Bauarten bekannt. Diese haben gemein, dass das Energiespeichervermögen solcher Zellen mit deren fortschreitender Betriebsdauer abnimmt. Die Zellen altern.

Die JP 2001 313037 A offenbart eine galvanische Zelle mit einem nichtwässrigen Elektrolyten mit einem Anodenkollektor aus Kupfer, einem aktiven Anodenmaterial schicht auf dem Anodenkollektor. Wenigstens eine Oberfläche des Anodenkollektors ist von einer Nickelschicht bedeckt, die aus Nickel besteht oder Nickel als Bestandteil enthält.

Die US 2007/0196729 A1 offenbart eine prismatische Batterie mit einer Elektrodengruppe in einem prismatischen Metallgehäuse. Die Elektroden und die Stromkollektoren sind teilweise von einem U-förmigen isolierenden Rahmen bedeckt.

Der vorliegenden Erfindung liegt daher die Aufgabe zugrunde, die Lebensdauer galvanischer Zellen zu erhöhen. Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße galvanische Zelle, ausgebildet als Primär- oder Sekundärzelle, kann einen elektrischen Strom abgeben. Die galvanische Zelle weist wenigstens zwei Elektroden auf. Auch weist die galvanische Zelle mindestens zwei Ableiter auf, welche jeweils einer dieser Elektroden zugeordnet sind. Diese Ableiter werden von diesem elektrischen Strom durchflossen. Weiterhin weist die galvanische Zelle einen Elektrolyten auf, welcher diese genannten Elektroden wirkverbindet. Der elektrische Strom erzeugt in jedem durchflossenen Ableiter eine Verlustleistung. Die Querschnitte dieser Ableiter sind so bemessen, dass ein Verhältnis dieser Verlustleistungen geringer als ein vorgegebener Wert ist.

Obwohl es unterschiedliche Konstruktionen von galvanischen Zellen gibt, umfasst doch jede Konstruktion wenigstens eine positive Elektrode, eine negative Elektrode und einen Elektrolyten, der eine elektrochemische Verbindung von pos. Elektrode und neg. Elektrode herstellt. Eine galvanische Zelle speichert Energie in chemischer Form. Ein elektrischer Strom kann mittels Wandlung der gespeicherten chemischen in elektrische Energie abgegeben werden.

Unter einer Primärzelle (Batterie) versteht man eine galvanische Zelle, die unter Verbrauch der Elektroden für eine gewisse Zeit Strom liefert. Anschließend müssen die Elektroden erneuert werden oder die galvanische Zelle ist nicht mehr zu gebrauchen.

Unter einer galvanischen Sekundärzelle versteht man eine wiederaufladbare Speichereinrichtung (Akkumulator) zur Speicherung von Energie. Die galvanische Sekundärzelle wird erstmalig aufgeladen, kann anschließend diesen Strom abgeben und wiederum aufgeladen werden. Die Wandlung von elektrischer in chemische Energie (und umgekehrt) ist verlustbehaftet. Mit fortschreitender Zahl von Lade-/Entladezyklen altert die wiederaufladbare Speichereinrichtung. Unumkehrbare chemische Reaktionen verändern zunehmend Teile der Elektroden und des Elektrolyten. Diese Teile stehen für die Wandlung von elektrischer in chemische Energie (und umgekehrt) nicht mehr zur Verfügung.

Die Elektroden dienen der Speicherung der Energie in chemischen Form. Es sind wenigstens zwei Elektroden vorgesehen. Eine dieser Elektroden ist zumeist negativer geladen (nachfolgend negative Elektrode genannt), als die andere dieser Elektroden. Auch im sog. entladenen Zustand besteht noch eine Restspannung zwischen den Elektroden und ein restlicher Überschuss von Elektronen in der sogenannten negativen Elektrode.

Unter einem Ableiter soll ein elektrischer Leiter verstanden sein, welcher mit einer Elektrode zumindest elektrisch leitend verbunden ist. Ein Ableiter verbindet eine Elektrode zumindest elektrisch mit der Außenwelt. Weiterhin kann diese Verbindung zwischen einem Ableiter und einer Elektrode auch thermische und/oder mechanische Vorgänge ermöglichen. So kann die durch die Verlustleistung in einem Ableiter erzeugte Wärmeenergie über diesen Ableiter in das Innere einer galvanischen Zelle geleitet werden.

Mindeste Temperaturen beschleunigen chemische Vorgänge oder ermöglichen diese teilweise erst. Das gilt sowohl für die erwünschte Umwandlung von chemischer in elektrische Energie (und umgekehrt) als auch für unerwünschte nicht umkehrbare chemische Reaktionen. Insbesondere die Letztgenannten lassen eine galvanische Zelle altern. Somit ist eine unerwünschte Erwärmung von Bereichen einer galvanischen Zelle zu vermeiden.

Leiter setzen einem elektrischen Strom im allgemeinen einen Widerstand entgegen. Dessen Höhe ist werkstoffspezifisch und kann über einen erheblichen Bereich variieren. Zur technischen Energieübertragung werden oft metallische Leiter verwendet, auch für die Ableiter in der erfindungsgemäßen galvanischen Zelle. Oftmals sind die Werkstoffe mehrerer Ableiter unterschiedlich und weisen unterschiedliche spezifische Leitfähigkeiten (oder spezifischen Widerstand) auf. Wird ein Leiter von einem elektrischem Strom durchflossen, so erzeugt dieser im Leiter eine Verlustleistung. Diese ist proportional zum elektrischen Widerstand des Werkstoffs sowie zum Quadrat des durchgeleiteten Stroms. Diese Verlustleistung führt in der Regel zur Erwärmung des elektrischen Leiters bzw. Ableiters. Bei elektrischen Leitern mit unterschiedlichem elektrischen Widerstand bewirkt derselbe elektrische Strom unterschiedliche Verlust- bzw. Heizleistungen. Sofern die Leiter sonst identischen Umgebungen ausgesetzt sind, sind unterschiedliche Erwärmungen die Folge. Somit heizt sich ein Ableiter mit einem elektrisch schlechter leitenden Werkstoff stärker auf.

Der elektrische Widerstand eines Leiters wird im allgemeinen berechnet aus der leitenden Querschnittsfläche, der Länge dieses Leiters sowie dem spezifischen elektrischen Widerstand. Für geringere Erwärmung eines Ableiters kann dessen Querschnittsfläche vergrößert werden. Für ähnliche Verlustleistungen in den Ableitern kann ein höherer spezifischer elektrischer Widerstand eines Ableiters durch dessen größeren Querschnitt ausgeglichen werden. Mit der Verwendung unterschiedlicher Querschnitte für Ableiter aus verschiedenen Werkstoffen kann ein Verhältnis der Verlustleistungen begrenzt werden.

Die erfindungsgemäße Vorrichtung weist im Betrieb verringerte Temperaturunterschiede zwischen den Ableitern auf. Auch ist vorteilhaft die Betriebstemperatur eines ggf. elektrisch schlecht leitenden Ableiters gegenüber üblichen Bauarten verringert. Es wird weniger thermische Energie in das Innere der galvanischen Zelle gefördert. Eine treibende Ursache zur thermisch induzierten Alterung der betroffenen Werkstoffe wird verringert. Somit wird die Lebensdauer der galvanischen Zelle erhöht und die zugrundegelegte Aufgabe gelöst.

Es ist erfindungsgemäss, den Grenzwert zu den Verhältnissen der Verlustleistungen mit 2% vorzugeben. Je nach den Umgebungsbedingungen oder dem Einsatzzweck einer einzelnen oder einer Gruppe galvanischer Zellen beträgt dieser Grenzwert bevorzugt 1%. Dabei wird dieses Verhältnis zweier Verlustleistungen $P_1$ und $P_2$ aus dem Betrag der Differenz dieser Verlustleistungen geteilt durch die Wurzel des Produkts dieser Verlustleitungen berechnet:

$$Verh\ddot{a}ltnis : \frac{|P_1 - P_2|}{\sqrt{P_1 * P_2}}$$

Bevorzugt weist ein elektrischer Ableiter einer negativen Elektrode Kupfer und/oder Nickel auf. Besonders bevorzugt weist dieser Ableiter überwiegend Kupfer und/oder Nickel auf.

Bevorzugt weist jeder Ableiter für eine positive Elektrode Aluminium auf. Besonders bevorzugt weist dieser Ableiter überwiegend Aluminium auf.

Ein einer negativen Elektrode zugeordneter Ableiter weist bevorzugt einen Kernbereich mit einem ersten Werkstoff auf. Dieser Kernbereich ist bevorzugt in einem Umhüllungsbereich von einem zweiten Werkstoff wenigstens teilweise umgeben. Dieser zweite Werkstoff ist elektrisch weniger leitfähig bzw. weist einen höheren spezifischen elektrischen Widerstand auf, als dieser erste Werkstoff. Dabei ist dieser zweite Werkstoff bezüglich des Elektrolyts und/oder der Umgebung chemisch beständiger, als dieser erste Werkstoff. Die Verwendung eines bestimmten Werkstoffs für einen Ableiter und/oder die Verwendung eines bestimmten Elektrolyten kann aber für die Funktion einer galvanischen Zelle unumgänglich oder besonders wirtschaftlich sein. Mitunter ist der verwendete Elektrolyt für den Werkstoff eines Ableiters chemisch schädlich. In solchen Fällen kann ein Ableiter bevorzugt mit einem chemisch widerstandsfähigeren Werkstoff wenigstens teilweise überzogen sein. Auch die Umgebung kann für den ersten Werkstoff des Ableiters schädlich sein. Die Umhüllung kann auch zum Schutz dieses ersten Werkstoffs gegen Einflüsse aus der Umgebung sein.

Innerhalb eines Kontaktbereichs eines Ableiters kann dieser in Kontakt mit dem Elektrolyt und/oder der Umgebung stehen. Vorteilhaft entspricht der Umhüllungsbereich des Ableiters diesem Kontaktbereich, so dass ein unmittelbarer Kontakt des Elektrolyten und/oder der Umgebung mit dem Kernbereich des Ableiters vermieden wird. Besonders vorteilhaft kann der Kernbereich einer negativen Elektrode zugeordneten Ableiters auch vollständig umhüllt sein. Das dient der Beständigkeit des Kernbereichs des Ableiters gegenüber dem Elektrolyt und/oder der Umgebung.

Bevorzugt ist dieser zweite Werkstoff so ausgewählt, dass dieser gegenüber dem verwendeten Elektrolyt und/oder der Umgebung auch bei elektrischen Spannungen innerhalb der galvanischen Zelle bzw. zwischen diesen Elektroden größer als 3,5 Volt chemisch beständig ist.

Bevorzugt weist dieser erste Werkstoff Kupfer und/oder dieser zweite Werkstoff Nickel auf. Besonders bevorzugt weist dieser erste Werkstoff überwiegend Kupfer und/oder dieser zweite Werkstoff überwiegend Nickel auf.

Ein einer positiven Elektrode zugeordneter Ableiter weist bevorzugt einen Kernbereich mit einem dritten Werkstoff und einem Umhüllungsbereich mit einem vierten Werkstoff auf. Dabei umgibt dieser Umhüllungsbereich diesen Kernbereich wenigstens teilweise. Der vierte Werkstoff ist so gewählt, dass er elektrisch weniger leitfähig als der dritte Werkstoff ist. Auch ist dieser vierte Werkstoff bezüglich des Elektrolyts chemisch beständiger als dieser dritte Werkstoff. Die Verwendung eines bestimmten Werkstoffs für einen Ableiter und/oder die Verwendung eines bestimmten Elektrolyten kann aber für die Funktion einer galvanischen Zelle unumgänglich oder besonders wirtschaftlich sein. Mitunter ist der verwendete Elektrolyt für den Werkstoff eines Ableiters chemisch schädlich. In solchen Fällen kann ein Ableiter bevorzugt mit einem chemisch widerstandsfähigeren Werkstoff wenigstens teilweise überzogen sein. Auch die Umgebung kann für den dritten Werkstoff des Ableiters schädlich sein. Die Umhüllung kann auch zum Schutz dieses dritten Werkstoffs gegen Einflüsse aus der Umgebung sein.

Vorzugsweise weist ein Ableiter für eine positive Elektrode einen Kontaktbereich auf. Dieser steht im Kontakt mit dem Elektrolyt und/oder der Umgebung. Bevorzugt ist der Umhüllungsbereich dieses Ableiters auf diesen Kontaktbereich begrenzt. Besonders bevorzugt ist der Kernbereich dieses Ableiters vollständig vom Umhüllungsbereich umgeben.

Bevorzugt ist dieser vierte Werkstoff so ausgewählt, dass dieser gegenüber dem verwendeten Elektrolyt und/oder der Umgebung auch bei elektrischen Spannungen innerhalb der galvanischen Zelle bzw. zwischen diesen Elektroden größer als 3,5 Volt chemisch beständig ist.

Bevorzugt weist dieser dritte Werkstoff Kupfer und/oder dieser vierte Werkstoff Aluminium auf. Besonders bevorzugt weist dieser dritte Werkstoff überwiegend Kupfer und/oder dieser vierte Werkstoff überwiegend Aluminium auf.

Eine Elektrode der erfindungsgemäßen galvanischen Zelle weist einen Ableiterkontaktbereich auf. Dort wird ein Kontakt mit wenigstens einem zugeordneten Ableiter hergestellt. Dieser Ableiterkontaktbereich wird von einem elektrischen Strom durchflossen. Dieser Ableiterkontaktbereich kann auch als zweidimensionale Fläche ausgebildet sein. Bevorzugt ist die von diesem elektrischen Strom durchflossene Querschnittsfläche dieses Ableiterkontaktbereichs mindestens so groß bemessen, wie der Querschnitt des zugeordneten Ableiters. So wird ein Engpass im Stromkreis vermieden.

Bevorzugt wird einer Elektrode einer galvanischen Zelle mit wenigstens einem ihr zugeordneten Ableiter innerhalb dieses Ableiterkontaktbereichs der Elektrode verbunden. Vorzugsweise wird diese Verbindung durch eine Schweißverbindung gebildet, welche zur Durchleitung dieses Stroms elektrisch leitend ausgebildet ist. Besonders bevorzugt wird dieser Schweißverbindung mit einem Ultraschallschweißverfahren erzeugt.

Die erfindungsgemäße galvanische Zelle ist für den Einsatz mit verschiedenen Werkstoffen und Elektrolyten geeignet. Bevorzugt weist zumindest der Elektrolyt Lithium-Ionen auf.

Besonders bevorzugte geometrische Anordnungen von Zellen bzw. Batterien (Schaltungen von Zellen) sind in den Figuren dargestellt, wobei

    Figur 1 den Querschnitt eines Lithium-Ionen-Akkumulators,
    Figur 2 eine perspektivische Ansicht einer anderen Ausführung eines Lithium-Ionen-Akkumulators und
    Figur 3 eine schematische Darstellung der Schichtung einiger Bauteile einer galvanischen Zelle zeigt.

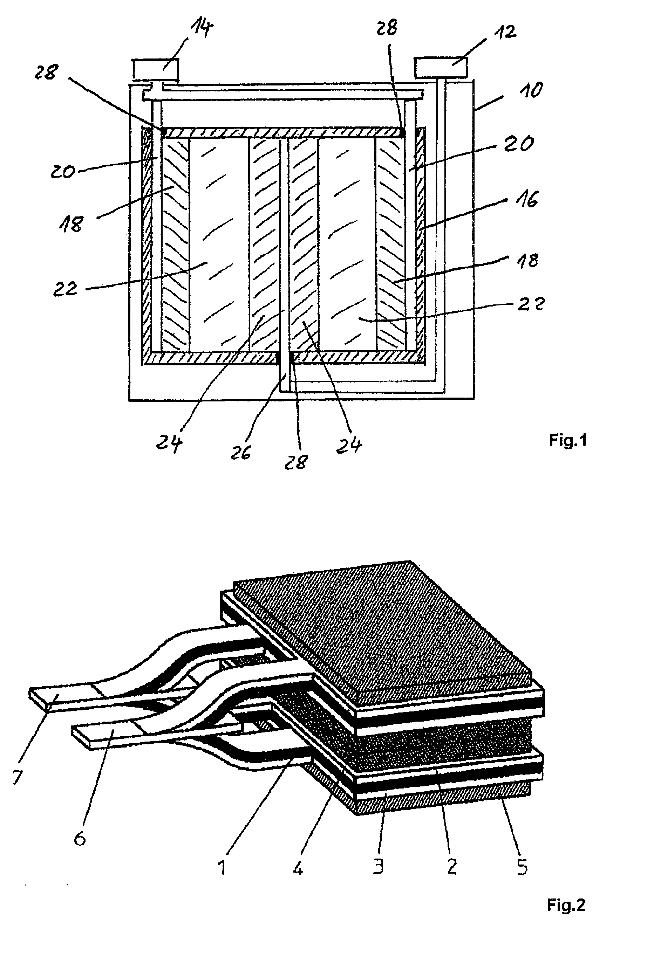

In Figur 1 ist ein Lithium-Ionen-Akkumulator von einem Gehäuse 10 umgeben. Zwischen der neg. Elektrode 18 und der pos. Elektrode 24 befindet sich der Elektrolyt 22. Der Akkumulator weist zwei Hälften auf, wobei in jeder Hälfte zwei Elektroden mit dazwischen angeordnetem Elektrolyt vorhanden sind. Die beiden Hälften sind in der Verpackung der galvanischen Zellen 16 zum Beispiel aus Kunststoff hermetisch abgeschlossen. Die Stromableiter 20 für die neg. Elektrode 18 sind durch eine Siegelung 28 gasdicht in die Zelle hineingefügt. Ebenso der Stromableiter 26 aus Aluminium, der zur pos. Elektrode 24 gehört. Die Stromableiter 20 bzw. 26 führen zu den Batterieklemmen 14 bzw. 12, welche außerhalb des Gehäuses angeordnet sind.

Figur 2 zeigt den Aufbau einer zweiten Ausführungsform. Hier ist auf die Ableiterschicht 2 die neg. Elektrode 4 und auf die Ableiterschicht 3 die pos. Elektrode 5 aufgebracht. Dieser Elektrodenverbund kann in gewünschter Anzahl gestapelt oder gewickelt werden und anschließend mit Elektrolyt getränkt und verpackt werden. In Figur 2 sind zwei solche Anordnungen gestapelt. Die äußeren Polableiter sind mit 6 für die positive Elektrode und 7 für die negative Elektrode bezeichnet.

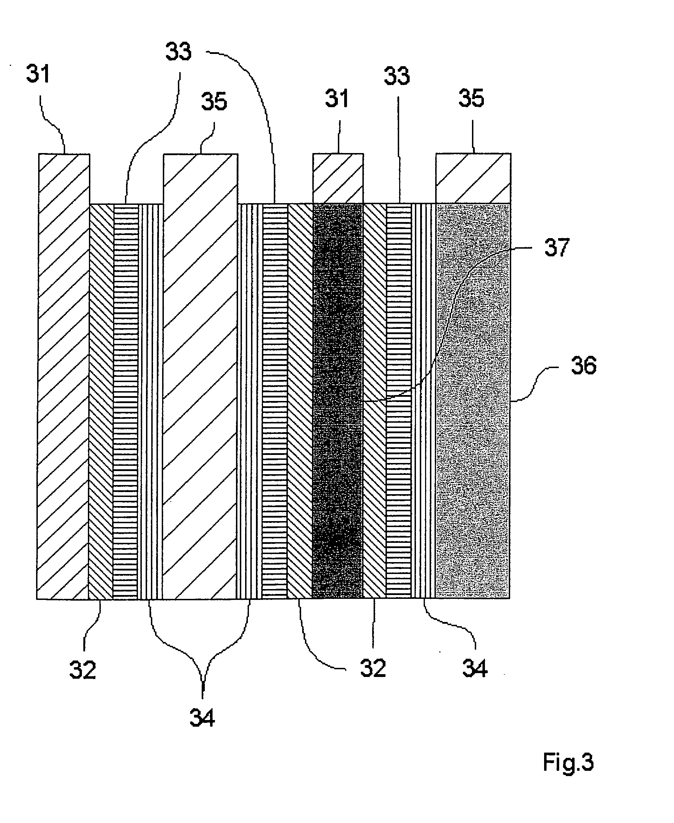

Figur 3 zeigt eine schematische Anordnung, wie sie in einer galvanischen Zelle verwirklicht sein kann. Das Schema verdeutlicht die unterschiedliche Dicke von Ableitern zum Ausgleich unterschiedlicher elektrischer Leitfähigkeiten. Im Schema sind von links nach rechts durch Rechtecke dargestellt ein negativer Stromableiter 31, eine negative Elektrode 32, eine Elektrolytschicht 33, eine positive Elektrode 34 sowie ein vergleichsweise dickerer positiver Ableiter 35. Dieser positive Ableiter 35 ist aus einem elektrisch schlechter leitfähigen Werkstoff gefertigt, als der negative Ableiter 31. Bei angenommener gleicher Tiefe der Schichten ist der Querschnitt des positiven Ableiters 35 vergrößert, um die Differenz der Verlustleistungen erfindungsgemäß zu begrenzen. Figur 3 stellt ebenfalls dar, dass ein Ableiter 35 mit mehreren Elektroden 34 in Wirkverbindung stehen kann. Der Schichtaufbau setzt sich spiegelsymmetrisch nach rechts bis zum nächsten negativen Ableiter 31 fort. Das Schema zeigt, wie beispielsweise 3 Elektroden 34 von nur 2 Ableitern 35 kontaktiert sein können. Das reduziert die Zahl erforderlicher Ableiter mit entsprechender Verringerung der Materialkosten.

Das Verhältnis der Schichtdicken der Ableiter 31 und 35 entspricht in etwa den Gegebenheiten beim Einsatz der Paarung Kupfer und Aluminium für diese Ableiter. Sollte beispielsweise Nickel anstelle von Kupfer verwendet werden, so sind die Schichtdicken der Ableiter 31 und 35 entsprechend anzupassen.

Die beiden Ableiter 31 und 35 auf der rechten Seite weisen teilweise Umhüllungsbereiche 37 und 36 mit Beschichtungen mit zweiten bzw. vierten Werkstoffen zum Schutz der Kernbereiche gegenüber dem Elektrolyt und/oder der Umgebung auf.

Figur 3 zeigt nicht, dass ein Ableiter mittels einer Schweißverbindung mit einer ihm zugeordneten Elektrode oder deren metallischen Träger verbunden sein kann.

**Patentansprüche**

1. Galvanische Zelle, d.h. Primär- oder Sekundärzelle, zur Abgabe eines elektrischen Stroms mit

mindestens zwei Elektroden (18, 24, 4, 5, 32, 34), mindestens zwei diesen Elektroden jeweils zugeordneten Ableitern (20, 26, 2, 3, 31, 35), welche von diesem elektrischen Strom durchflossen werden, welcher in jedem der Ableiter eine Verlustleistung erzeugt,

und einem Elektrolyten zur Wirkverbindung dieser Elektroden,

**dadurch gekennzeichnet, dass**

die einzelnen Querschnitte dieser Ableiter (20, 26, 2, 3, 31, 35) jeweils so bemessen sind, dass ein Verhältnis von in zwei Ableitern erzeugten Verlustleistungen geringer als ein vorgegebener Grenzwert ist, wobei dieses Verhältnis aus dem Betrag der Differenz der beiden Verlustleistungen geteilt durch die Quadratwurzel des Produkts der beiden Verlustleistungen berechnet wird, und wobei der Grenzwert für dieses Verhältnis höchstens 2% beträgt.

2. Galvanische Zelle nach Anspruch 1, **dadurch gekennzeichnet, dass** dieser vorgegebene Grenzwert zu diesem Verhältnis von zwei Verlustleistungen 1% beträgt, wobei dieses Verhältnis aus dem Betrag der Differenz zweier Verlustleistungen geteilt durch die Quadratwurzel des Produkts der beiden Verlustleistungen berechnet wird.

3. Galvanische Zelle nach einem der vorhergehenden Ansprüche, **dadurch gekennzeichnet, dass** jeder Ableiter (20, 2, 31) für eine negative Elektrode (18, 4, 32) Kupfer und/oder Nickel aufweist.

4. Galvanische Zelle nach einem der vorhergehenden Ansprüche, **dadurch gekennzeichnet, dass** jeder Ableiter (20, 2, 31) für eine negative Elektrode (18, 4, 32) überwiegend Kupfer und/oder Nickel aufweist.

5. Galvanische Zelle nach einem der vorhergehenden Ansprüche, **dadurch gekennzeichnet, dass** jeder Ableiter (26, 3, 35) für eine positive Elektrode (24, 5, 34) Aluminium aufweist.

6. Galvanische Zelle nach einem der vorhergehenden Ansprüche, **dadurch gekennzeichnet, dass** jeder elektrische Ableiter (26, 3, 35) für eine positive Elektrode (24, 5, 34) überwiegend Aluminium aufweist.

7. Galvanische Zelle nach einem der vorhergehenden Ansprüche, **gekennzeichnet durch** einen einer negativen Elektrode (18, 4, 32) zugeordneten Ableiter (20, 2, 31), welcher einen Kernbereich mit einem ersten Werkstoff und einen Umhüllungsbereich (37) mit einem zweiten Werkstoff aufweist und dieser Umhüllungsbereich (37) diesen Kernbereich wenigstens teilweise umgibt, wobei dieser zweite Werkstoff elektrisch weniger leitfähig als der erste Werkstoff ist und dieser zweite Werkstoff bezüglich des Elektrolyts und/oder der Umgebung chemisch beständiger als dieser erste Werkstoff ist.

8. Galvanische Zelle nach Anspruch 7, **dadurch gekennzeichnet, dass** dieser negativer Ableiter (20, 2, 31) einen Kontaktbereich zum Kontakt mit dem Elektrolyt und/oder der Umgebung aufweist, wobei der Umhüllungsbereich (37) dieses Ableiters (20, 2, 31) auf diesen Kontaktbereich begrenzt ist.

9. Galvanische Zelle nach Anspruch 7 oder 8, **dadurch gekennzeichnet, dass** der Umhüllungsbereich (37) dieses einer negativen Elektrode (18, 4, 32) zugeordneten Ableiters (20, 2, 31) dessen Kernbereich vollständig umhüllt.

10. Galvanische Zelle nach einem der Ansprüche 7 bis 9, **dadurch gekennzeichnet, dass** dieser zweite Werkstoff bezüglich des Elektrolyts und/oder der Umgebung auch bei elektrischen Spannungen zwischen diesen Elektroden größer als 3,5 V chemisch beständig ist.

11. Galvanische Zelle nach einem der Ansprüche 7 bis 10, **dadurch gekennzeichnet, dass** dieser erste Werkstoff Kupfer und/oder dieser zweite Werkstoff Nickel aufweist.

12. Galvanische Zelle nach einem der Ansprüche 7 bis 11, **dadurch gekennzeichnet, dass** dieser erste Werkstoff überwiegend Kupfer und/oder dieser zweite Werkstoff überwiegend Nickel aufweist.

13. Galvanische Zelle nach einem der vorhergehenden Ansprüche, **gekennzeichnet durch** einen einer positiven Elektrode (24, 5, 34) zugeordneten Ableiter (26, 3, 35), welcher einen Kernbereich mit einem dritten Werkstoff und einen Umhüllungsbereich (36) mit einem vierten Werkstoff aufweist und dieser Umhüllungsbereich (36) diesen Kernbereich wenigstens teilweise umgibt, wobei dieser vierte Werkstoff elektrisch weniger leitfähig als der dritte Werkstoff ist und dieser vierte Werkstoff bezüglich des Elektrolyts und/oder der Umgebung chemisch beständiger als dieser dritte Werkstoff ist.

14. Galvanische Zelle nach Anspruch 13, **dadurch gekennzeichnet, dass** dieser positiver Ableiter (26, 3, 35) einen Kontaktbereich zum Kontakt mit dem Elektrolyt und/oder der Umgebung aufweist, wobei der Umhüllungsbereich (36) dieses Ableiters (26, 3, 35) auf diesen Kontaktbereich begrenzt ist.

15. Galvanische Zelle nach Anspruch 13 oder 14, **dadurch gekennzeichnet, dass** der Umhüllungsbereich (36) dieses einer positiven Elektrode (24, 5, 34) zugeordneten Ableiters (26, 3, 35) dessen Kernbereich vollständig umhüllt.

## Claims

1. Galvanic cell, i.e. primary or secondary cell, for the delivery of an electric current, comprising:

   at least two electrodes (18, 24, 4, 5, 32, 34), at least two arresters (20, 26, 2, 3, 31, 35), which are assigned to each of the said electrodes and through which the said electric current flows while generating a power loss in each of the arresters, and an electrolyte for the operative connection of the said electrodes, **characterised in that** each of the individual cross-sections of the said arresters (20, 26, 2, 3, 31, 35) is dimensioned such that a ratio of power losses generated in two arresters is less than a preset limit value, wherein this ratio is calculated from the amount of the difference of the two power losses divided by the square root of the product of the two power losses, and wherein the limit value for the said ratio is maximally 2%.

2. Galvanic cell according to claim 1, **characterised in that** the said preset limit value for the said ratio of two power losses is 1 %, wherein the said ratio is calculated from the amount of the difference of two power losses divided by the square root of the product of the two power losses.

3. Galvanic cell according to any of the preceding claims, **characterised in that** each arrester (20, 2, 31) for a negative electrode (18, 4, 32) contains copper and/or nickel.

4. Galvanic cell according to any of the preceding claims, **characterised in that** each arrester (20, 2, 31) for a negative electrode (18, 4, 32) contains predominantly copper and/or nickel.

5. Galvanic cell according to any of the preceding claims, **characterised in that** each arrester (26, 3, 35) for a positive electrode (24, 5, 34) contains aluminium.

6. Galvanic cell according to any of the preceding claims, **characterised in that** each electric arrester (26, 3, 35) for a positive electrode (24, 5, 34) contains predominantly aluminium.

7. Galvanic cell according to any of the preceding claims, **characterised by** an arrester (20, 2, 31) assigned to a negative electrode (18, 4, 32), the arrester (20, 2, 31) having a core region with a first material and a covering region (37) with a second material and the said covering region (37) at least partially surrounding the said core region, wherein the said second material is less conductive electrically than the first material and wherein the said second material has a higher chemical resistance to the electrolyte and/or to the environment than the said first material.

8. Galvanic cell according to claim 7, **characterised in that** the said negative arrester (20, 2, 31) has a contact region for contact with the electrolyte and/or with the environment, the covering region (37) of the said arrester (20, 2, 31) being limited to the said contact region.

9. Galvanic cell according to claim 7 or 8, **characterised in that** the covering region (37) of the said arrester (20, 2, 31) assigned to a negative electrode (18, 4, 32) completely covers its core region.

10. Galvanic cell according to any of claims 7 to 9, **characterised in that** the said second material has a higher chemical resistance to the electrolyte and/or to the environment even if the electric voltages between the said electrodes are higher than 3.5 V.

11. Galvanic cell according to any of claims 7 to 10, **characterised in that** the said first material contains copper and/or the said second material contains nickel.

12. Galvanic cell according to any of claims 7 to 11, **characterised in that** the said first material contains predominantly copper and/or the said second material contains predominantly nickel.

13. Galvanic cell according to any of the preceding claims, **characterised by** an arrester (26, 3, 35) assigned to a positive electrode (24, 5, 34), the arrester (26, 3, 35) having a core region with a third material and a covering region (36) with a fourth material and the said covering region (36) at least partially surrounding the said core region, wherein the said fourth material is less conductive electrically than the third material and wherein the said fourth material has a higher chemical resistance to the electrolyte and/or to the environment than the said third material.

14. Galvanic cell according to claim 13, **characterised in that** the said positive arrester (26, 3, 35) has a contact region for contact with the electrolyte and/or with the environment, the covering region (36) of the said arrester (26, 3, 35) being limited to the said contact region.

15. Galvanic cell according to claim 13 or 14, **characterised in that** the covering region (36) of the said arrester (26, 3, 35) assigned to a positive electrode (24, 5, 34) completely covers its core region.

**Revendications**

1. Cellule galvanique, soit une celle primaire ou secondaire, destinée à distribuer un courant électrique, comprenant au moins deux électrodes (18, 24, 4, 5, 32, 34), comprenant au moins des dérivateurs (20, 26, 2, 3, 31, 35) associés correspondants au moins auxdites deux électrodes, lesdits dérivateurs étant traversés par ledit courant électrique, qui produit dans chacun des dérivateurs une puissance dissipée, et comprenant un électrolyte destiné à une établir une liaison fonctionnelle entre lesdites électrodes, **caractérisée en ce que** la section transversale individuelle desdits dérivateurs (20, 26, 2, 3, 31, 35) est dimensionnée de manière qu'un rapport des puissances dissipées dans deux dérivateurs soit inférieur à une valeur limite prédéfinie, ledit rapport étant calculé à partir de la valeur absolue de la différence des deux puissances dissipées divisée par la racine carrée du produit des deux puissances dissipées, et la valeur limite pour ledit rapport s'élevant au plus à 2 %.

2. Cellule galvanique selon la revendication 1, **caractérisée en ce que** ladite valeur limite prédéfinie par rapport audit rapport des deux puissances dissipées s'élève à 1 %, ledit rapport étant calculé à partir de la valeur absolue de la différence des deux puissances dissipées divisée par la racine carrée du produit des deux puissances dissipées.

3. Cellule galvanique selon l'une quelconque des revendications précédentes, **caractérisée en ce que** chaque dérivateur (20, 2, 31) pour une électrode négative (18, 4, 32) comprend du cuivre et/ou du nickel.

4. Cellule galvanique selon l'une quelconque des revendications précédentes, **caractérisée en ce que** chaque dérivateur (20, 2, 31) pour une électrode négative (18, 4, 32) comprend essentiellement du cuivre et/ou du nickel.

5. Cellule galvanique selon l'une quelconque des revendications précédentes, **caractérisée en ce que** chaque dérivateur (26, 3, 35) pour une électrode positive (24, 5, 34) comprend de l'aluminium.

6. Cellule galvanique selon l'une quelconque des revendications précédentes, **caractérisée en ce que** chaque dérivateur (26, 3, 35) pour une électrode positive (24, 5, 34) comprend essentiellement de l'aluminium.

7. Cellule galvanique selon l'une quelconque des revendications précédentes, **caractérisée par** un dérivateur (20, 2, 31) associé à une électrode négative (18, 4, 32), ledit dérivateur présente une partie d'âme comprenant un premier matériau et une zone d'enveloppe (37) dotée d'un deuxième matériau et ladite zone d'enveloppe (37) entoure au moins partiellement ladite partie d'âme, ledit deuxième matériau étant moins électroconducteur que le premier matériau et ledit deuxième matériau par rapport à l'électrolyte et/ou à l'environnement étant moins résistant aux agents chimiques que le premier matériau.

8. Cellule galvanique selon la revendication 7, **caractérisée en ce que** ledit dérivateur négatif (20, 2, 31) présente une zone de contact avec l'électrolyte et/ou l'environnement, la zone d'enveloppe (37) dudit dérivateur (20, 2, 31) étant limitée à ladite zone de contact.

9. Cellule galvanique selon la revendication 7 ou la revendication 8, **caractérisée en ce que** la zone d'enveloppe (37) dudit dérivateur (20, 2, 31) associée à une électrode négative (18, 4, 32) enveloppe entièrement sa partie d'âme.

10. Cellule galvanique selon l'une quelconque des revendications 7 à 9, **caractérisée en ce que** ledit deuxième matériau concernant l'électrolyte et/ou l'environnement est également résistant aux agents chimiques même lorsque les tensions électriques entre lesdites électrodes sont supérieures à 3,5 V.

11. Cellule galvanique selon l'une quelconque des revendications 7 à 10, **caractérisée en ce que** ledit premier matériau contient du cuivre et/ou ledit deuxième matériau contient du nickel.

12. Cellule galvanique selon l'une quelconque des revendications 7 à 11, **caractérisée en ce que** ledit premier matériau contient essentiellement du cuivre et/ou ledit deuxième matériau contient essentiellement du nickel.

13. Cellule galvanique selon l'une quelconque des revendications précédentes, **caractérisée par** un dérivateur (26, 3, 35) associé à une électrode positive (24, 5, 34), ledit dérivateur présente une partie d'âme comprenant un troisième matériau et une zone d'enveloppe (36) comprenant un quatrième matériau et ladite zone d'enveloppe (36) entoure au moins partiellement ladite partie d'âme, ledit quatrième matériau étant moins électroconducteur que le troisième matériau et ledit quatrième matériau concernant l'électrolyte et/ou l'environnement étant moins résistant aux agents chimiques que le troisième matériau.

14. Cellule galvanique selon la revendication 13, **caractérisée en ce que** ledit dérivateur positif (26, 3, 35) présente une zone de contact destinée au contact avec l'électrolyte et/ou l'environnement, la zone d'enveloppe (36) dudit dérivateur (26, 3, 35) étant limitée à ladite zone de contact.

**15.** Cellule galvanique selon la revendication 13 ou la revendication 14, **caractérisée en ce que** la zone d'enveloppe (36) dudit dérivateur (26, 3, 35) associé à une électrode négative (24, 5, 34) enveloppe entièrement sa partie d'âme.

Fig.1

Fig.2

Fig.3

**IN DER BESCHREIBUNG AUFGEFÜHRTE DOKUMENTE**

**In der Beschreibung aufgeführte Patentdokumente**

- JP 2001313037 A
- US 20070196729 A1